(19) Europäisches Patentamt
European Patent Office
Office européen des brevets

(11) **EP 1 083 145 B1**

(12) **EUROPÄISCHE PATENTSCHRIFT**

(45) Veröffentlichungstag und Bekanntmachung des Hinweises auf die Patenterteilung:
**05.03.2003 Patentblatt 2003/10**

(51) Int Cl.⁷: **C01B 6/04**

(21) Anmeldenummer: **00116904.4**

(22) Anmeldetag: **05.08.2000**

(54) **Faserförmiges Magnesiumhydroxid-Hydrid und dessen Herstellung**

Fibrous magnesium hydroxide hydride and process for its production

Hydrure-hydroxide de magnésium fibreux et son procédé de production

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **07.09.1999 DE 19942627**

(43) Veröffentlichungstag der Anmeldung:
**14.03.2001 Patentblatt 2001/11**

(73) Patentinhaber: **Hogrefe, Andre, Dipl.-Min.**
**23617 Stockelsdorf (DE)**

(72) Erfinder: **Hogrefe, Andre, Dipl.-Min.**
**23617 Stockelsdorf (DE)**

(56) Entgegenhaltungen:
• **KAUFFMAN J W ET AL: "INFRARED MATRIX ISOLATION STUDIES OF THE INTERACTIONS OF MG, CA, SR, AND BA ATOMS AND SMALL CLUSTERS WITH WATER" HIGH TEMPERATURE SCIENCE, HUMAN PRESS, XX, Bd. 18, 1984, Seiten 97-118, XP000565900 ISSN: 0018-1536**
• **SAKAI ET AL: "Structures and vibrational frequencies of beryllium hydride hydroxide, hydroxyborane(2), hydroxymethylene, magnesium hydride hydroxide, aluminum hydride hydroxide and hydroxysilylene" CHEMICAL PHYSICS LETTERS, Bd. 130, Nr. 1-2, 1986, Seiten 103-110, XP001032580**
• **CURTISS ET AL.: "Ab initio molecular orbital calculations on beryllium and magnesium atom reactions with water" CHEMICAL PHYSICS LETTERS, 1980, Seiten 69-74, XP001032584**
• **JORDAN ET AL.: "Theory of metal atom-water interactions and alkali halide dimers " ACS SYMP. SER., 1982, Seiten 377-393, XP001032585**

## Beschreibung

Es ist bekannt, daß im System OH-H-Mg im karbonatfreien Milieu unter Normalbedingungen die Verbindungen $Mg(OH)_2$, $MgH_2$ und $H_2O$ auftreten. Verbindungen jedoch, die durch eine Komproportionierungsreaktion aus Magnesium und Wasser entstehen, sind nicht bekannt. Darüber hinaus treten in der Natur zwei Varietäten der $Mg(OH)_2$-Verbindung auf. Die eine ist der Brucit, der in der trigonalen Raumgruppe $P\bar{3}m1$ kristallisiert (F. Zigan & R. Rothbauer, *Neues Jahrbuch für Mineralogie Monatshefte* (1967)137-143), die andere ist der nur selten vorkommende, faserförmige Nemalith, der aber die gleiche Raumgruppe und Zusammensetzung wie der Brucit besitzen soll (Gmelin, Syst.-Nr. 27, Mg, Tl. B, 1939, 60). Eine nadelartige Magnesiumhydroxid-Phase, jedoch nicht der Nemalith mit faserartiger Morphologie, wie er im Gmelin beschrieben wurde, ist durch Umkristallisation (Pseudomorphose) einer nadeligen, hexagonalen Verbindung mit der Zusammensetzung $Mg(OH)_{2-nx}A_x^{n-} \cdot m\ H_2O$ synthetisiert worden (DE C2 Patentschrift, PN: 2906759, ICP: C01F005-14). Die Entstehung des Nemaliths ist noch ungeklärt.

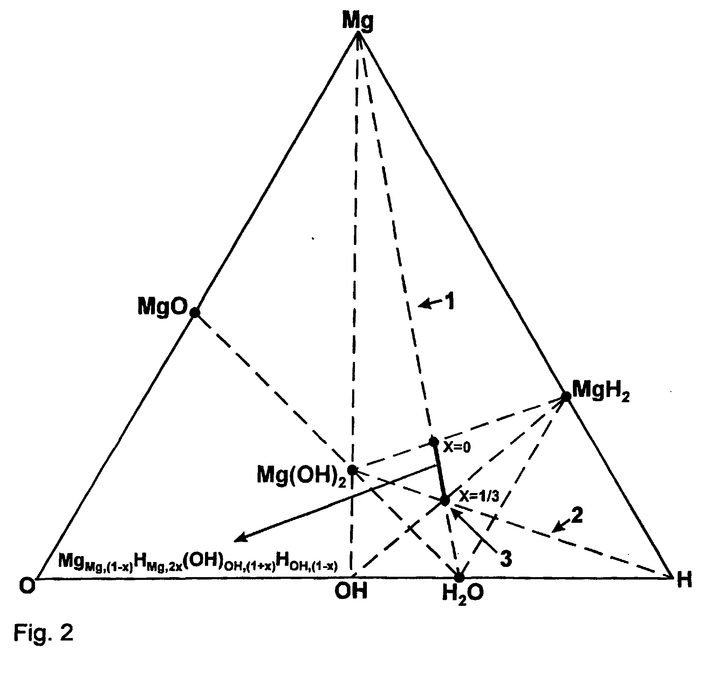

Bei Synthesen des Brucits mit metallischem Magnesium und destilliertem Wasser passiviert sich das Magnesium durch eine MgO-Schicht und das Magnesium wandelt sich nur langsam unter Bildung von Wasserstoff in Brucit um (Gmelin, Syst.-Nr. 27, Mg, Tl. A, 1952, 318). Anders ist dies mit karbonatischen Wässern, die zunächst eine stärkere Lösung des metallischen Magnesiums bewirken und dann das Magnesium unter Wasserstoffentwicklung zu Brucit umwandeln (Gmelin, Syst.-Nr. 27, Mg, Tl. A, 1952, 318). Die Magnesiumkonzentration in der Lösung wird bei den Reaktionen auch als Maß für die Menge des sich entwickelnden Wasserstoffs benutzt (Gmelin, Syst.-Nr. 27, Mg, Tl. A, 1952, 318). Die Reaktion, die bisher der Korrosion des Magnesiums zugrunde liegt, ist die durch die Kreuzreaktion der Alkemaden Mg-$H_2O$ (1) und H-$Mg(OH)_2$ (2) (s. Fig. 2) beschreibbare Reaktion: $Mg + 2H_2O \rightarrow Mg(OH)_2 + H_2\uparrow$.

Im Rahmen der Erfindung neuer, einfacher Synthesewege für unterschiedliche Materialien wurde gefunden, daß sich metallisches Magnesium mit destilliertem Wasser, trotz anders lautender Angaben in der Literatur, rasch umsetzen läßt und sich dabei in geschlossenen Gefäßen kein Wassertstoff-Überdruck, sondern ein Unterdruck entwickelt. Die oben beschriebene Korrosion des Magnesiums mit der Entwicklung von Wasserstoff kann deshalb nicht die einzig mögliche Reaktion des metallischen Magnesiums mit Wasser darstellen, zumal auch eine Komproportionierungsreaktion von Magnesium und Wasser kristallchemisch plausibel ist. Aufgrund der Ähnlichkeit der Ionenradien einer $OH^-$-Gruppe von 1.33 Å mit dem eines $H^-$-Ions von 1.3 Å ist ein Ersatz der OH-Gruppen und auch bis zu einem gewissen Grad die Substitution des Magnesiums in der Brucit/Periklas-Struktur -Struktur durch Wasserstoff denkbar.

Im Folgenden wird auf die im Patentanspruch 1 beschriebene Verbindung $Mg(OH)_2 \cdot H_2$ aufgrund der faserigen Mikromorphologie und des eingebauten Wasserstoffs unter dem Begriff "Hydridnemalith" bezug genommen.

Der Hydridnemalith des Patentanspruches 1 ist eine neue Verbindung im Teilsystem Mg-OH-H (s.h. Fig. 2), die in einer Komproportionierungsreaktion direkt aus den Komponenten Mg und $H_2O$ hergestellt werden kann, ähnlich wie die $Mg(OH)_2$-Phase auch direkt aus den Komponenten MgO und $H_2O$ darstellbar ist.

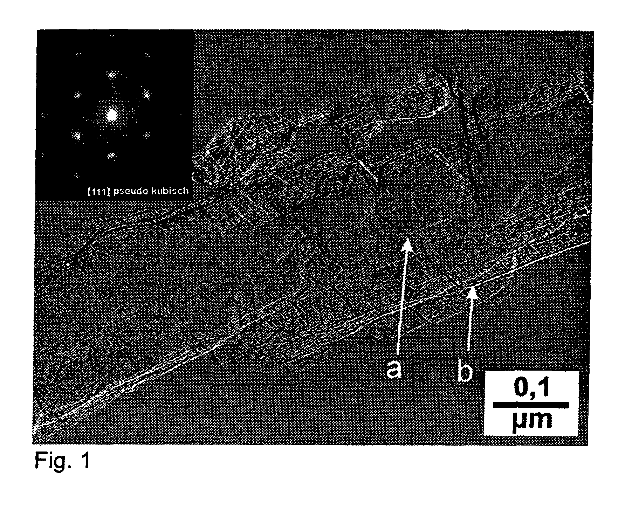

Transmissionselektronenmikroskopische Untersuchungen des Hydridnemaliths und Gitterkonstantenbestimmungen (Czank & Hogrefe, *"TEMGIB - Ein Programm zur Bestimmung der Gitterkonstanten und des Bravais-Gitters unbekannter Kristalle aus Elektronenbeugungsaufnahmen"*, Optik 55, Suppl. **33** (1991) 77) haben ergeben, daß der Hydridnemalith im Gegensatz zum Brucit/Nemalith bzw. Periklas mit einer monoklinen C-zentrierten bis tetragonalen I-zentrierten Symmetrie kristallisiert (s. Fig. 1). In Fig. 1 ist eine polykristalline Faser gezeigt. Die Kristallite weisen eine starke Lineation auf und besitzen in pseudo-kubischer [110]-Richtung senkrecht zur Faserichtung eine durchschnittliche Größe von 0,1 µm (1a, 1b), während sie in Faserrichtung (1b) ein vielfaches dieser Länge erreichen können. In pseudo-kubischer [111]-Richtung dagegen besitzen die Plättchen nur eine Ausdehnung von ca. 5-10 nm. Der Hydridnemalith besitzt strukturelle Verwandtschaften zum Brucit/Nemalith und auch zum Periklas. Die Verwandtschaften zur Brucit/Periklas-Struktur -Struktur bestehen vermutlich darin, daß die Magnesiumpositionen als auch die Hydroxid-/Oxid-Positionen in den genannten Phasen teilweise durch Wasserstoff besetzt sein werden und so eine direkte Verbindung von Magnesium und Wasser entstehen kann.

Der Hydridnemalith ist kristallchemisch auf der Basis der Brucit/Nemalith-Struktur -Struktur mit der chemischen Defektsummenformel $Mg_{Mg,(1-x)}H_{Mg,2x}(OH)_{OH,(1+x)}H_{OH,(1-x)}$ (*mS-tI*, Brucit-Typ) sowie auf der Basis der Periklas-Struktur mit der Defektsummenformel $Mg_{Mg,(1-x)}\ H_{Mg,2x}\square_{Mg}(OH)_{O,(1+x)}H_{O,(1-x)}$ (*mS-tI*, Periklas-Typ) und einem x = 1/3 nach der IUPAC-Nomenklatur beschreibbar (International Union of Pure and Applied Chemistry (IUPAC), *"Nomenklatur der Anorganischen Chemie"*, VCH-Verlag (1995)).

Diese Defektsummenformeln sind noch nicht strukturell bestätigt. Es liegen jedoch elektronenmikroskopische Hinweise auf eine komplette Beweglichkeit und Unordnung der Atome innerhalb der Magnesium- und Sauerstoffschichten vor.

Die Untersuchung der Doppelbrechung des Hydridnemaliths ergab einen Wert von ca. $\Delta n = 0.35\text{-}0.40$, während der Brucit/Nemalith lediglich eine Doppelbrechung von $\Delta n = 0.21$ aufweist.

Die pyknometrische Dichtebestimmung des Hydridnemaliths ergab einen Wert von 1.98(5) $g/cm^3$, während die Dichte des Brucits/Nemaliths 2.38 $g/cm^3$ (Römpp Chemie Lexikon M-Pk (1991) 2594) beträgt.

Die chemischen Defektsummenformeln $Mg_{Mg,(1-x)}H_{Mg,2x}(OH)_{OH,(1+x)}H_{OH,(1-x)}$ und $Mg_{Mg,(1-x)}\ H_{Mg,2x}\square_{Mg}$

$(OH)_{O,(1+x)}H_{O,(1-x)}$ sind auf der Basis der Brucit/Nemalith-, bzw. Periklas-Struktur formuliert, bei dem das x die Höhe der durch zwei Wasserstoffatome protonierten Magnesiumpositionen darstellt. Bei einem x = 0 würde die Verbindung die chemische Summenformel Mg(OH)H besitzen. Diese Verbindung stellt ebenfalls eine direkte Verbindung aus Magnesium und Wasser im Mol-Verhältnis von 1 : 1 dar. Hier wäre ausgehend von der Brucit-Struktur gerade ein $OH^-$-Ion durch ein $H^-$-Ion ersetzt. Ausgehend von der Periklas-Struktur wären zwei symmetrieäquivalente Sauerstoffposition durch ein $OH^-$-Ion und ein $H^-$-Ion besetzt.

Reaktionen mit Pauschalzusammensetzungen zwischen dem Kreuzungspunkt (3) der beiden Alkemaden Mg-$H_2O$ (1) und H-Mg(OH)$_2$ (2), sowie Mg (s. Fig. 2) ergeben jedoch, daß immer Reste von metallischem Magnesium auftreten. Dies zeigt, daß das x in der Defektsummenformel bei der Bildung der Phase nicht variabel ist und eine Verbindung mit der chemischen Zusammensetzung Mg(OH)H nicht gebildet wird.

Wägeanalytische Ergebnisse belegen, daß bei der Wahl von Pauschalzusammensetzungen zwischen dem Kreuzungspunkt (3) der Alkemaden Mg-$H_2O$ (1) und H-Mg(OH)$_2$ (2) sowie $H_2O$ immer eine Verbindung resultiert, die ein x = 1/3 aufweist.

Thermogravimetrische und differentialthermoanalytische Untersuchungen am Hydridnemalith belegen darüber hinaus, daß der Hydridnemalith sein Kristallwasser bei etwa 403 °C verliert. Dabei ändert sich seine äußere Gestallt kaum, so daß die Phase in dieser Hinsicht als hochtemperatur-formbeständig zu bezeichnen ist. Der restliche Wasserstoff der resultierenden Verbindung Mg(OH)H kann erst bei einer Temperatur > 1200 °C aus der Phase ausgetrieben werden.

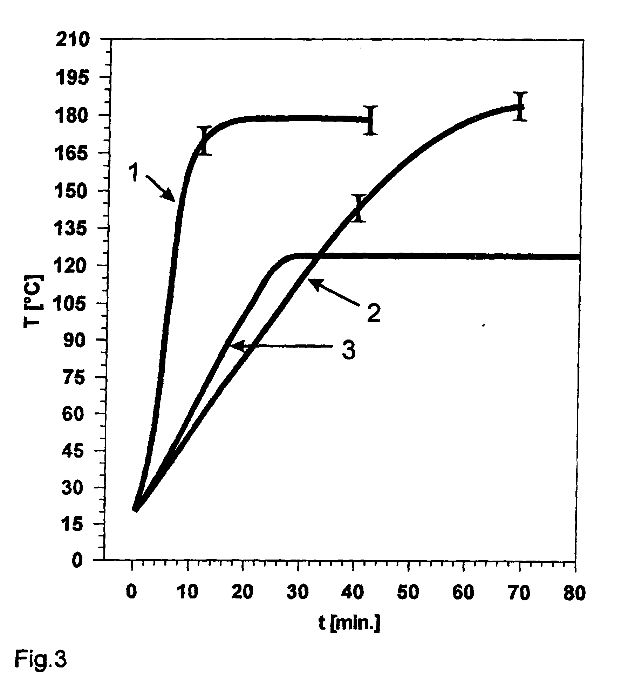

Für die komplette Transformation des Magnesiums zum Hydridnemalith nach Patentanspruch 2 wird handelsübliches destilliertes Wasser (PH = 6) oder Deuteriumoxid ($D_2O$) mit handelsüblichem Magnesium (z.B. Magnesium-Band) in einem Mol-Verhältnis von ($H_2O$ oder $D_2O$)/Mg ≥ 2 in einen Teflon-Autoklaven gegeben, der wiederum von einem metallischen Autoklaven aufgenommen wird. Es kann auch ein zugeschweißtes Glasgefäß (z.B. Glasröhrchen) verwendet werden. Der Autoklav oder das Glasgefäß wird nach Patentanspruch 2 und 3 in einem Ofen oder auf einer Heizplatte mit einer Aufheizrate von ≥ 4 °C/min. auf eine Haltetemperatur von > 160 °C aufgeheizt. Nach einer Zeit von etwa 30-50 Minuten ist nach dem Start der Reaktion die Synthese bei dieser Temperaturbehandlung abgeschlossen. In Fig. 3 bilden die Kurven 1 und 2 ein Temperatur-Zeitfenster, das für die Reaktion günstig ist. Die senkrechten Markierungen auf den Kurven 1 und 2 geben den ungefähren Beginn und das Ende der Reaktion an. Bei der Wahl einer hohen Aufheizrate und einer hohen Haltetemperatur können polykristalline Körper der neuen Verbindung erhalten werden, während bei der Wahl einer Temperatur-Zeitbehandlung, die der Kurve 3 entspricht, die Körper zu einem grobkörnigen Pulver zerfallen. Je niedriger die Haltetemperatur bei der Transformation ist, desto stärker zerfallen die Körper und desto länger dauert die Transformation. Bei der Synthese hat sich ein Befüllungsgrad des Reaktionsgefäßes von 10-20% und eine Zusammensetzung des Reaktionsgutes von 80-90 Mol% Wasser als günstig herausgestellt.

Nach erfolgter Reaktion kann man das weiße Material noch auf 150 °C trocknen. Wählt man ein Mol-Verhältnis von Wasser zu Magnesium kleiner als 2, so ist die Reaktion nicht komplett und es bleibt neben der entstehenden Verbindung noch metallisches Magnesium übrig.

Bei Reaktionen mit verschiedenen Anteilen von Magnesium und Wasser, wobei die Pauschalzusammensetzung zwischen den darstellenden Punkten von $H_2O$ und dem Kreuzungspunkt (3) der Alkemaden Mg-$H_2O$ (1) und H-Mg(OH)$_2$(2) liegt (s.h. Fig. 2), wird beobachtet, daß unter Berücksichtigung der Kinetik (s. h. Fig. 3) immer ein Unterdruck im Reaktionsgefäß entsteht. Der Teflon-Deckel eines Teflon-Autoklaven sitzt daher immer sehr fest und man vernimmt beim Öffnen ein deutliches Plopp-Geräusch. Hierdurch wird deutlich, daß kein Wasserstoff entsteht. Würde die Reaktion im Autoklaven nach der bisher bekannten Reaktionsgleichung Mg + 2$H_2O$ → Mg(OH)$_2$ + $H_2$↑ ablaufen, müßte bei dieser Reaktion immer ein sehr hoher Wasserstoffüberdruck entstehen, der bei den durchgeführten Reaktionen einen Wert von mindestens 11 kbar erreicht und dem der Teflon-Autoklav nicht standhalten kann. Der Druck, der sich entwickeln müßte, ist mit der allgemeinen Gasgleichung P V = n R T und dem Boyleschen Gesetz $P_AV_A$ = $P_EV_E$ berechenbar.

Auch die Möglichkeit, ein zugeschweißten Glasröhrchen als Reaktionsgefäß zu verwenden, beweist, daß kein Überdruck entsteht und deshalb auch nicht die oben beschriebene Reaktion abläuft, wenn man die kinetischen Faktoren, das heißt die Aufheizraten (s. h. Fig. 3), einhält.

Die Untersuchung des PH-Wertes des eingesetzten Wassers und des Restwassers ergab zudem keinen Unterschied im PH-Wert (PH = 6). Ein quantitativer Fällungsversuch des beim Freiwerden von $H_2$ in Lösung gehenden Magnesiums mit konz. Na(OH)-Lösung verlief negativ. Die Tatsache, daß bei der Reaktion kein Magnesium in Lösung geht, wird auch dadurch bestätigt, daß bei Reaktionen im Autoklaven, bei dem das Magnesium lediglich im Kontakt mit dem Wasserdampf steht, die gleiche Verbindung wie bei anderen Reaktionen resultiert, bei dem das Magnesium im direkten Kontakt mit der flüssigen Phase steht. Auch hierdurch wird deutlich, daß kein Wasserstoff bei den durchgeführten Reaktionen entsteht, sondern in die Kristallstruktur eingebaut wird.

Von Vorteil bei dem im Patentanspruch 2 und 3 formulierten Syntheseverfahren ist die Berücksichtigung der Ausgangsformen der Magnesium-Körper und eine Haltetemperatur von > 160 °C zur Herstellung spezieller Hydridnemalith-Körper. Spezielle Formen sind z.B. ein dünnes Magnesium-Band oder ein Magnesium-Zylinder. Bei der Gestaltung spezieller Formen ist allgemein zu berücksichtigen, daß aufgrund der gleichzeitig, von allen Seiten aus erfolgenden Transformation genau so viele Hydridnemalith-Teilkörper entstehen, wie Flächen an dem Magnesium-Ausgangskörper vorhanden sind.

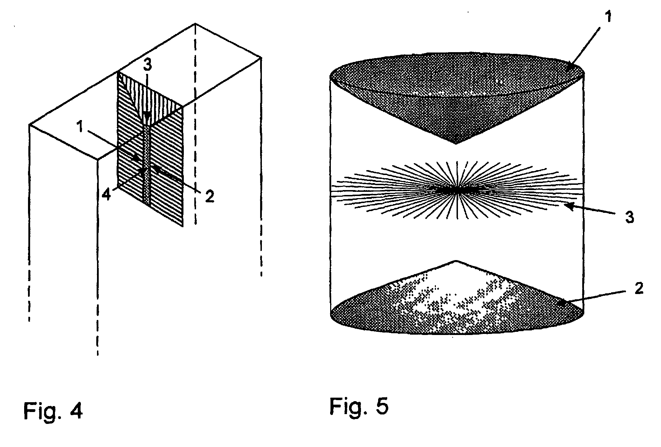

In Fig. 4 ist in einem Querschnitt gezeigt, wie die Kristallisation/Transformation bei Verwendung eines dünnen, quaderförmigen Magnesium-Bandes erfolgt. Die pseudo-hexagonalen Plättchen des Hydridnemaliths liegen mit ihren <110>-Richtungen senkrecht zur Oberfläche des Metalls und die Transformationsfronten 1, 2 und 3 liegen parallel zur Metalloberfläche. Das Magnesium (4) wird von allen Seiten aus gleichzeitig transformiert. Die Schrafur gibt die <110>-Ausrichtung (Faserstruktur) der Kristallite an. Bei der Wahl eines sechsflächigen Magnesium-Körpers entstehen auch sechs Hydridnemalith-Teilkörper. Die vier entstehenden Körper eines 0,2 mm dicken Magnesium-Bandes sind jedoch entsprechend klein, so daß zwei großvolumige Teilkörper entstehen, deren Reaktionsfronten in der Fig. 4 mit 1 und 2 gekennzeichnet sind. Nach der Transformation sieht es deshalb so aus, als ob sich das Magnesium-Band bei der Transformation zum Hydridnemalith verdoppelt hätte. Tatsächlich tritt aber auch bei der Transformation eine erhebliche Volumenausdehnung um mehr als das zweifache auf.

Bei der Synthese eines Hydridnemalith-Zylinders muß berücksichtigt werden, daß insgesamt drei Hydridnemalith-Körper bei der Verwendung eines Magnesium-Zylinders entstehen. In Fig. 5 sind die Körper gezeigt. Es entstehen zwei Hydridnemalith-Kegel (1)(2) und ein zylindrischer Restkörper, der allerdings aufgrund der auftretenden Spannungen durch die Kristallisationsrichtung in einzelne Partien zerfällt. Die Schraffierung 3 deutet die <110>-Ausrichtung (Faserstruktur) der Kristallite im Restkörper an. Der zylindrische Hydridnemalith-Restkörper, besitzt ca. den zweifachen Durchmesser des ursprünglich eingesetzten Magnesium-Zylinders. Die Kristallite des Restkörpers weisen konzentrisch auf die Zylinderachse, während die Kristallite in den Kegeln parallel zur Zylinderachse liegen.

Bei der im Patentanspruch 2 genannten Synthese kann durch die im Patentanspruch 4 angegebene Zugabe von Polymeren, z.B. von festem, wasserlöslichem Polyethylenoxid ($C_2H_4O$), zur Flüssigkeit ($H_2O$, $D_2O$) der entstehende Hydridnemalith mit Kohlenstoff verunreinigt werden. Die Verunreinigung des Hydridnemaliths mit Kohlenstoff kann vorteilhaft bei der Entwicklung von Brennstoffzellen sein, die mit Kohlenstoff als Energieträger arbeiten. Die Zugabe von wasselöslichem Polyethylenoxid ist vor allem auch zur besseren Bearbeitbarkeit des spröden Materials hilfreich.

Experimente mit dem Hydridnemalith haben gezeigt, daß die Empfindlichkeit gegen Karbonatbildung an der Luft gering und die Temperatur-Formbeständigkeit innerhalb des reduzierenden Bereiches einer leuchtenden Flamme (ca. 700-800 °C) sehr hoch ist, ganz im Gegensatz zur bekannten Brucit-Phase, die sich bereits bei 380 °C unter Bildung von Magnesiumoxid zersetzt (Römpp Chemie Lexikon M-Pk (1991) 2594), wodurch sich aufgrund des Massen/ Dichte-Quotienten eine Volumenreduktion von 46.5% einstellen sollte. Innerhalb des reduzierenden Bereiches, oberhalb einer leuchtenden Flamme zeigt der Hydridnemalith eine sehr helle Leuchterscheinung, deren Herkunft noch ungeklärt ist. Ein weiterer beobachteter Effekt ist, daß ein mit Kohlenstoff verunreinigter Hydridnemalith mit einer geringeren Farbtemperatur leuchtet und es im Kontakt mit Glas, in einer blauen, etwa 900 °C heißen Flamme zur Bildung von Blasen im Glas kommt, als würde sich das Glas im Kontakt zum Hydridnemalith auf einer wesentlich höheren Temperatur befinden. Darüber hinaus wird der Hydridnemalith beim Ausstreichen auf einem Objektträger im reflektierten Licht unter dem Mikroskop leicht bläulich. Bei wesentlich höheren Scherspannungen verstärkt sich dieser Effekt bis zu einem tiefen Blau.

Aufgrund der chemischen Zusammensetzung, der faserigen Mikromorphologie, der oben beschriebenen Effekten und der Möglichkeit Hydridnemalithkörper mit spezieller Ausrichtung der Kristallite zu synthetisieren, ergeben sich zahlreiche Anwendungsmöglichkeiten.

Der Hydridnemalith könnte als Festkörperelektrolyt in einer Gasdiffusionselektrode dienen, bei der im Hydridnemalith aufgrund der beschreibbaren Red-Ox.-Reaktionen ein ständiger Abbau und eine Erneuerung der Komponenten stattfindet, wodurch der Elektrolyt nicht mehr ausgetauscht werden müßte und auch bei hohen Temperaturen einsetzbar wäre.

Der Hydridnemalith ist nämlich als eine Verbindung beschreibbar (s.h. Fig. 2), die aus den Komponenten $Mg(OH)_2$, $MgH_2$ und $H_2O$ im Verhältnis 1 : 1 : 2 ($MgH_2 \cdot Mg(OH)_2 \cdot 2 H_2O$), oder aus den Komponenten MgO, $MgH_2$ und $H_2O$ im Verhältnis 1 : 1 : 3, oder aus den Komponenten MgO, $H_2O$ und $H_2$ im Verhältnis 1 : 1 : 1 aufgebaut wird.

Reduktionen der $Mg(OH)_2$-Komponente des Hydridnemaliths mit unterschiedlichen Energieträgern, sowie die Oxidation der $MgH_2$-Komponente des Hydridnemaliths durch Luftsauerstoff können wie folgt formuliert werden:

1. Red.-Ox.-Reaktion mit Wasserstoff und Sauerstoff:

$$\text{Reduktion: } Mg(OH)_2 + 2H_2 \rightarrow MgH_2 + 2H_2O$$

$$Oxidation: MgH_2 + O_2 \rightarrow Mg(OH)_2$$

2. Red.-Ox.-Reaktion mit Methanol ($CH_3OH$) und Sauerstoff:

$$Reduktion: 3Mg(OH)_2 + 2CH_3OH \rightarrow 3MgH_2 + 2CO_2 + 4H_2O$$

$$Oxidation: 3MgH_2 + 3O_2 \rightarrow 3Mg(OH)_2$$

3. Red.-Ox.-Reaktion mit Kohlenstoff und Sauerstoff:

$$Reduktion: Mg(OH)_2 + C \rightarrow MgH_2 + CO_2$$

$$Oxidation: MgH_2 + O_2 \rightarrow Mg(OH)_2$$

Schließlich kommt aufgrund der sehr kleinen Kristallitgröße von bis zu 0.1 um in pseudo-kubischer <110>-Richtung und einer wesentlich kleineren in pseudo-kubischer <111>-Richtung und dem damit verbundenen hohen Korngrenzenvolumen die Verwendung als Absorber für unterschiedliche Stoffe in Betracht. Auch der Einsatz in der Gassensorik und der Katalyse wären mögliche Anwendungsgebiete. Möglicherweise lassen sich auch für die glasverarbeitende Industrie Behälter aus Hydridnemalith anfertigen, die einen geringeren Energieverbrauch zum Schmelzen des Glases bewirken.

Die folgenden Beispiele erläutern die Herstellung des Hydridnemaliths entsprechend der Erfindung im einzelnen.

Beispiel 1:

Zur Herstellung zweier Streifen des Hydridnemaliths wird ein Magnesium-Bandstück mit den Abmessungen 2.5 x 0.3 x 0.02 cm und 0.2 ml destilliertes Wasser in ein Glasröhrchen gegeben und dieses zugeschweißt. Das Glasröhrchen besitzt mit einem Durchmesser von 0.47 und einer Länge von ca. 6.3 cm ein Innenvolumen von ca. $1{,}09\ cm^3$.

Das Röhrchen wird auf einer Heizplatte mit der Aufheizrate von etwa 16°C/min. auf eine Haltetemperatur von etwa 180 °C gebracht (s. h. Fig. 3 (1)). Nach etwa 40 Minuten ist die Transformation abgeschlossen und es befinden sich zwei Hydridnemalith-Bänder im Röhrchen. Um eine größere Menge des Hydridnemaliths zu synthetisieren, kann man auch einen Teflon-Autoklaven verwenden.

Will man dagegen ein pulverförmiges Material synthetisieren, so kann man die Haltetemperatur auf z.B. 120 oder 135 °C erniedrigen. Bei einer Haltetemperatur von 135 °C ist die Transformation nach 3 Stunden abgeschlossen, während bei einer Haltetemperatur von nur 120 °C nach 3 Stunden noch Reste des Magnesiums vorhanden sind.

Bei der Verwendung von Glasgefäßen ist darauf zu achten, daß die Aufheizrate $\geq 4$ °C beträgt. Beträgt sie beispielsweise nur 1 °C/min. kann es passieren, daß das Röhrchen explodiert, weil man offensichtlich kinetisch in den Bereich der Reaktion gerät, bei der Wasserstoff entsteht und nicht mehr in die Kristallstruktur eingebaut wird.

Beispiel 2:

Zur Herstellung von kohlenstoffhaltigem Hydridnemalith wird etwa 1 g Polyethylenoxid ($C_2H_4O$) in 30 ml destilliertes Wasser aufgelöst und 7 ml dieser Lösung mit etwa 20 cm Magnesium-Band in ein 11 $cm^3$ fassenden Teflon-Autoklaven gegeben. Dieser wird von einem Stahl-Autoklaven aufgenommen und in einem Ofen mit einer Aufheizrate von etwa 6 °C/min. bis zu einer Haltetemperatur von 180 bis 190 °C aufgeheizt. Nach etwa zwei Stunden, nach Beginn des Aufheizens, kann man den Ofen ausstellen und den Autoklaven auskühlen lassen.

**Patentansprüche**

1.    Faserförmiges, nanoporöses, hochtemperaturbeständiges, polykristallines Magnesiumhydroxid-Hydrid mit der chemischen Zusammensetzung $Mg(OH)_2 \bullet H_2$ oder $Mg(OD)_2 \bullet D_2$.

**2.** Verfahren zur Herstellung von faserförmigem Magnesiumhydroxid-Hydrid nach Anspruch 1, **dadurch gekennzeichnet, daß** man Magnesium und destilliertes Wasser oder Deuteriumoxid in einem geschlossenen Gefäß mit einer Rate von $\geq 4\ °C$/min. aufheizt.

**3.** Verfahren zur Herstellung von faserförmigem Magnesiumhydroxid-Hydrid nach Anspruch 2, **dadurch gekennzeichnet, daß** man bis zu einer Haltetemperatur $> 160\ °C$ aufheizt.

**4.** Verfahren zur Herstellung von faserförmigem Magnesiumhydroxid-Hydrid nach Anspruch 2 oder 3, **dadurch gekennzeichnet, daß** man in Gegenwart eines wasserlöslichen Polymeren aufheizt.


**Claims**

**1.** A fibrous, nanoporous, high-temperature-resistant, polycrystalline magnesium hydroxide hydride having the chemical composition $Mg(OH)_2 \cdot H_2$ or $Mg(OD)_2 \cdot D_2$.

**2.** A method for the manufacture of fibrous magnesium hydroxide hydride according to Claim 1, **characterised in that** magnesium and distilled water or deuterium oxide are heated in a closed vessel at a rate of $\geq 4\ °C$/min.

**3.** The method for the manufacture of fibrous magnesium hydroxide hydride according to Claim 2, **characterised in that** heating is carried out up to a holding temperature $> 160\ °C$.

**4.** The method for the manufacture of fibrous magnesium hydroxide hydride according to Claim 2 or 3, **characterised in that** heating is carried out in the presence of a water-soluble polymer.


**Revendications**

**1.** Hydroxyde-hydride de magnésium fibreux, nanoporeux, résistant à de fortes températures, polycristallin, de composition chimique $Mg(OH)_2 \cdot H_2$ ou $Mg(OD)_2 \cdot D_2$.

**2.** Procédé pour la fabrication d'hydroxyde-hydride de magnésium fibreux selon la revendication 1, **caractérisé en ce que** l'on chauffe du magnésium et de l'eau distillée ou de l'oxyde de deutérium dans un récipient fermé à un rythme $\geq 4\ °C$/min.

**3.** Procédé pour la fabrication d'hydroxyde-hydride de magnésium selon la revendication 2, **caractérisé en ce que** l'on chauffe jusqu'à une température d'arrêt $> 160\ °C$.

**4.** Procédé pour la fabrication d'hydroxyde-hydride de magnésium selon la revendication 2 ou 3, **caractérisé en ce que** l'on chauffe en présence d'un polymère soluble à l'eau.

[111] pseudo kubisch

a    b

0,1
——
μm

Fig. 1

Mg

MgO

MgH$_2$

Mg(OH)$_2$

X=0

X=1/3

1

2

3

Mg$_{Mg,(1-x)}$H$_{Mg,2x}$(OH)$_{OH,(1+x)}$H$_{OH,(1-x)}$

O

OH

H$_2$O

H

Fig. 2

Fig.3

Fig. 4

Fig. 5